# EUROPEAN PATENT APPLICATION

(11) **EP 3 327 622 A1**
(43) Date of publication of application: **30.05.2018**
(21) Application number: 17202570.2
(22) Date of filing: 20.11.2017
(51) Int. Cl.: G06K 9/00

(54) **FINGERPRINT TEMPLATE ACQUISITION METHOD AND DEVICE**

(30) Priority: 24.11.2016 CN 201611049379
(71) Applicant: Beijing Xiaomi Mobile Software Co., Ltd., Beijing 100085 (CN)
(72) Inventor: JI, Chuanshun, Beijing, 100085 (CN); LI, Weishan, Beijing, 100085 (CN)
(74) Representative: Jeffrey, Philip Michael

(57) **Abstract**

Disclosed is a fingerprint template acquisition method and device. The method includes that: at least one piece of fingerprint information of a user is acquired 101 through a fingerprint sensor; for each of the at least one piece of fingerprint information, a quality parameter of the piece of fingerprint information is acquired 102; when it is determined that the quality parameter meets a preset condition, the fingerprint information is determined 103 as target fingerprint information; and the target fingerprint information determined from the at least one piece of fingerprint information is synthesized 104 into a fingerprint template.

## Description

### TECHNICAL FIELD

The present invention generally relates to the field of fingerprint recognition, and more particularly, to a fingerprint template acquisition method and device.

### BACKGROUND

Along with continuous increase of users' requirements on information security, fingerprint recognition has increasingly widespread applications, and may be applied to multiple scenes such as access control verification and payment verification. In a fingerprint recognition process, it is judged whether fingerprint information of a user is matched with a pre-acquired fingerprint template or not, and whether the user passes verification or not is determined according to a judgment result. In order to improve accuracy of fingerprint recognition, it is of concern how a fingerprint template is acquired.

A terminal device may usually be equipped with a fingerprint sensor. Every time when a user inputs fingerprint information on the fingerprint sensor, the terminal device may acquire the fingerprint information as target fingerprint information through the fingerprint sensor and count the acquired pieces of target fingerprint information. When the count value reaches a preset threshold value, the terminal device may synthesize the multiple pieces of acquired target fingerprint information into a fingerprint template.

In such a fingerprint template acquisition process, the fingerprint information input by the user is directly determined as the target fingerprint information without considering quality of the fingerprint information. If fingerprint information with relatively poor quality is acquired, the quality of the fingerprint template may be relatively poor, which causes low accuracy of fingerprint recognition.

### SUMMARY

Accordingly, the present invention provides a fingerprint template acquisition method and device, in accordance with claims which follow.

According to a first aspect of embodiments of the present invention, a fingerprint template acquisition method is provided, which may include that: at least one piece of fingerprint information of a user is acquired through a fingerprint sensor; for each of the at least one piece of fingerprint information, a quality parameter of the piece of fingerprint information is acquired, the quality parameter being used to represent quality of the fingerprint information; when it is determined that the quality parameter meets a preset condition, the piece of fingerprint information is determined as a piece of target fingerprint information, the preset condition being configured to specify a quality parameter of fingerprint information; and at least one piece of target fingerprint information determined from the at least one piece of fingerprint information is synthesized into a fingerprint template.

In such a manner, in a fingerprint template acquisition process, not every piece of acquired fingerprint information is determined to be target fingerprint information for synthesizing into the fingerprint template. Instead, influence of the quality of the fingerprint information is fully considered. When the quality parameter of a certain piece of fingerprint information meets the preset condition, the piece of fingerprint information may be determined to be a piece of target fingerprint information. In this way, quality of the fingerprint template is improved, and accuracy of fingerprint recognition is further improved.

In a possible implementation, the quality parameter may include a feature point number, and the step that the piece of fingerprint information is determined as a piece of target fingerprint information when it is determined that the quality parameter meets the preset condition may include that: when it is determined that the feature point number is larger than a first preset threshold value, the piece of fingerprint information is determined as the piece of target fingerprint information, the first preset threshold value being used to specify a minimum feature point number of target fingerprint information.

In another possible implementation, the quality parameter may include a fingerprint area, and the step that the piece of fingerprint information is determined as the piece of target fingerprint information when it is determined that the quality parameter meets the preset condition may include that: when it is determined that the fingerprint area is larger than a second preset threshold value, the piece of fingerprint information is determined as the piece of target fingerprint information, the second preset threshold value being used to specify a minimum fingerprint area of target fingerprint information.

In another possible implementation, the quality parameter may include an overlapping area with previous piece of target fingerprint information, and the step that the quality parameter of the fingerprint information is acquired may include that: the overlapping area of the piece of fingerprint information and the previous piece of target fingerprint information is calculated.

In another possible implementation, the step that the piece of fingerprint information is determined as a piece of target fingerprint information when it is determined that the quality parameter meets the preset condition may include that: when it is determined that the overlapping area of the piece of fingerprint information and the previous piece of target fingerprint information is larger than a third preset threshold value, the piece of fingerprint information is determined as the piece of target fingerprint information, the third preset threshold value being used to specify a minimum overlapping area of target fingerprint information and previous piece of target fingerprint information.

In another possible implementation, the step that the target fingerprint information determined in the at least one piece of fingerprint information is synthesized into the fingerprint template may include that: when a number of the determined pieces of target fingerprint information reaches a fourth preset threshold value, the determined at least one piece of target fingerprint information are synthesized into the fingerprint template, the fourth preset threshold value being used to specify an amount of target fingerprint information.

In another possible implementation, the method may include that: when an operating instruction to be verified is received, fingerprint information to be verified is acquired through the fingerprint sensor; and when it is determined that the fingerprint information to be verified is matched with the fingerprint template, a response is provided to the operating instruction.

According to a second aspect of the embodiments of the present invention, a fingerprint template acquisition device is provided, which may include: a fingerprint collection module, configured to acquire at least one piece of fingerprint information of a user through a fingerprint sensor; an acquisition module, configured to, for each of the at least one piece of fingerprint information, acquire a quality parameter of the piece of fingerprint information, the quality parameter being used to represent quality of the fingerprint information; a determination module, configured to, when it is determined that the quality parameter meets a preset condition, determine the piece of fingerprint information as a piece of target fingerprint information, the preset condition being used to specify a quality parameter of fingerprint information; and a synthesis module, configured to synthesize at least one piece of target fingerprint information determined from the at least one piece of fingerprint information into the fingerprint template.

The advantages and technical effects of the device according to the invention correspond to those of the method presented above.

In a possible implementation, the quality parameter may include a feature point number, and the determination module may further be configured to, when it is determined that the feature point number is larger than a first preset threshold value, determine the piece of fingerprint information as the piece of target fingerprint information, the first preset threshold value being used to specify a minimum feature point number of target fingerprint information.

In another possible implementation, the quality parameter may include a fingerprint area, and the determination module may further be configured to, when it is determined that the fingerprint area is larger than a second preset threshold value, determine the piece of fingerprint information as the piece of target fingerprint information, the second preset threshold value being used to specify a minimum fingerprint area of target fingerprint information.

In another possible implementation, the quality parameter may include an overlapping area with previous piece of target fingerprint information, and the acquisition module may further be configured to calculate the overlapping area of the piece of fingerprint information and the previous piece of target fingerprint information.

In another possible implementation, the determination module may further be configured to, when it is determined that the overlapping area of the piece of fingerprint information and the previous piece of target fingerprint information is larger than a third preset threshold value, determine the piece of fingerprint information as the piece of target fingerprint information, the third preset threshold value being used to specify a minimum overlapping area of target fingerprint information and previous piece of target fingerprint information.

In another possible implementation, the synthesis module may further be configured to, when a number of the determined pieces of target fingerprint information reaches a fourth preset threshold value, synthesize the determined at least one piece of target fingerprint information into the fingerprint template, the fourth preset threshold value being used to specify the number of the pieces of target fingerprint information.

In another possible implementation, the device may include: the fingerprint collection module, further configured to, when an operating instruction to be verified is received, acquire fingerprint information to be verified through the fingerprint sensor; and a response module, configured to, when it is determined that the fingerprint information to be verified is matched with the fingerprint template, provide a response to the operating instruction.

According to a third aspect of the embodiments of the present invention, a fingerprint template acquisition device is provided, which may include: a processor; a memory storing an instructions executable by the processor; and a fingerprint sensor, wherein the processor may be configured to: acquire at least one piece of fingerprint information of a user through the fingerprint sensor; for each of the at least one piece of fingerprint information, acquire a quality parameter of the piece of fingerprint information, the quality parameter being used to represent quality of the fingerprint information; when it is determined that the quality parameter meets a preset condition, determine the piece of fingerprint information as a piece of target fingerprint information, the preset condition being used to specify a quality parameter of fingerprint information; and synthesize at least one piece of target fingerprint information determined from the at least one piece of fingerprint information into a fingerprint template.

The advantages and technical effects of the device according to the invention correspond to those of the method presented above.

The technical solutions provided by the embodiments of the present invention may achieve the following beneficial effects.

According to the method and device provided by the embodiments, the at least one piece of fingerprint information of the user is acquired through the fingerprint sensor; for each of the at least one piece of fingerprint information, the quality parameter of each piece of fingerprint information is acquired; when it is determined that the quality parameter meets the preset condition, the fingerprint information is determined to be the target fingerprint information; and the determined target fingerprint information is synthesized into the fingerprint template. In the embodiments, in a fingerprint template acquisition process, not every piece of acquired fingerprint information is determined to be target fingerprint information for synthesizing into the fingerprint template. Instead, influence of the quality of the fingerprint information is fully considered. When the quality parameter of a certain piece of fingerprint information meets the preset condition, the piece of fingerprint information may be determined to be a piece of target fingerprint information. In this way, quality of the fingerprint template is improved, and accuracy of fingerprint recognition is further improved.

In one particular embodiment, the steps of the fingerprint template acquisition method are determined by computer program instructions.

Consequently, according to a fourth aspect, the invention is also directed to a computer program for executing the steps of a fingerprint template acquisition method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that the above general descriptions and detailed descriptions below are just exemplary and explanatory and not intended to limit the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is flow chart showing a fingerprint template acquisition method, according to an exemplary embodiment.
Fig. 2 is a flow chart showing a fingerprint template acquisition method, according to an exemplary embodiment.
Fig. 3 is a block diagram of a fingerprint template acquisition device, according to an exemplary embodiment.
Fig. 4 is a block diagram of a fingerprint template acquisition device, according to an exemplary embodiment.
Fig. 5 is a block diagram of a fingerprint template acquisition device, according to an exemplary embodiment.

### DETAILED DESCRIPTION

In order to make a purpose, technical solutions and advantages of the present invention clearer, the present invention will be further described below in detail with reference to implementations and the accompanying drawings. Here, schematic implementations of the present invention and descriptions thereof are adopted to explain the present invention and not intended to limit the present invention.

The embodiments of the present invention provide a fingerprint template acquisition method and device. The present invention will be described below in detail with reference to the accompanying drawings.

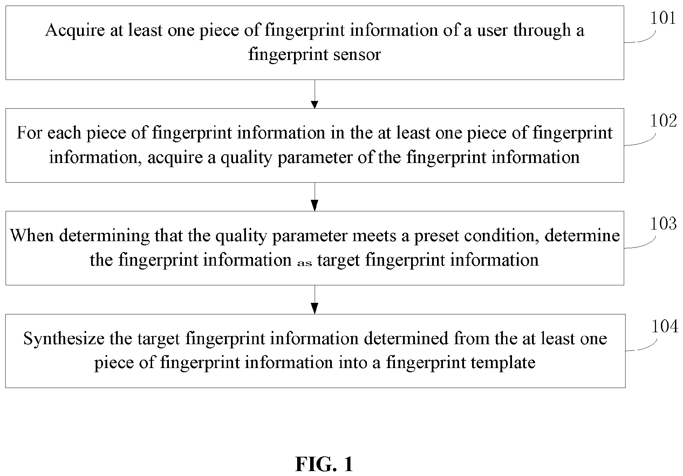

Fig. 1 is a flow chart showing a fingerprint template acquisition method, according to an exemplary embodiment. As shown in Fig. 1, the fingerprint template acquisition method is applied to a fingerprint recognition device, and includes the following steps.

In Step 101, at least one piece of fingerprint information of a user is acquired through a fingerprint sensor.

In Step 102, for each of the at least one piece of fingerprint information, a quality parameter of the fingerprint information is acquired, the quality parameter being used to represent quality of the fingerprint information.

In Step 103, when it is determined that the quality parameter meets a preset condition, the fingerprint information is determined as target fingerprint information, the preset condition being used to specify a quality parameter of fingerprint information.

In Step 104, the target fingerprint information determined from the at least one piece of fingerprint information is synthesized into a fingerprint template.

According to the method provided by the embodiment, the at least one piece of fingerprint information of the user is acquired through the fingerprint sensor; for each of the at least one piece of fingerprint information, the quality parameter of the piece of fingerprint information is acquired; when it is determined that the quality parameter meets the preset condition, the fingerprint information is determined as the target fingerprint information; and the determined target fingerprint information is synthesized into the fingerprint template. In the embodiment, in a fingerprint template acquisition process, not every piece of acquired fingerprint information is determined as target fingerprint information for synthesizing into the fingerprint template. Instead, influence of the quality of the fingerprint information is fully considered. When the quality parameter of a certain piece of fingerprint information meets the preset condition, the piece of fingerprint information may be determined as target fingerprint information. In this way, quality of the fingerprint template is improved, and accuracy of fingerprint recognition is further improved.

In a possible implementation, the quality parameter includes a feature point number, and the step that the fingerprint information is determined as the target fingerprint information when it is determined that the quality parameter meets the preset condition includes that:
when it is determined that the feature point number is larger than a first preset threshold value, the fingerprint information is determined as the target fingerprint information, the first preset threshold value being used to specify a minimum feature point number of target fingerprint information.

In another possible implementation, the quality parameter includes a fingerprint area, and the step that the fingerprint information is determined as the target fingerprint information when it is determined that the quality parameter meets the preset condition includes that:
when it is determined that the fingerprint area is larger than a second preset threshold value, the fingerprint information is determined as the target fingerprint information, the second preset threshold value being used to specify a minimum fingerprint area of target fingerprint information.

In another possible implementation, the quality parameter includes an overlapping area with a previous piece of target fingerprint information, and the step that the quality parameter of the fingerprint information is acquired includes that:
the overlapping area of the fingerprint information and the previous piece of target fingerprint information is calculated.

In another possible implementation, the step that the fingerprint information is determined as the target fingerprint information when it is determined that the quality parameter meets the preset condition includes that:
when it is determined that the overlapping area of the fingerprint information and the previous piece of target fingerprint information is larger than a third preset threshold value, the fingerprint information is determined as the target fingerprint information, the third preset threshold value being used to specify a minimum overlapping area of the target fingerprint information and the previous piece of target fingerprint information.

In another possible implementation, the step that the target fingerprint information determined from the at least one piece of fingerprint information is synthesized into the fingerprint template includes that:
when a number of the determined pieces of target fingerprint information reaches a fourth preset threshold value, the determined pieces of target fingerprint information are synthesized into the fingerprint template, the fourth preset threshold value being used to specify an amount of target fingerprint information.

In another possible implementation, the method includes that:
when an operating instruction to be verified is received, fingerprint information to be verified is acquired through the fingerprint sensor; and
when it is determined that the fingerprint information to be verified is matched with the fingerprint template, a response is provided to the operating instruction.

All of the optional technical solutions may be freely combined into optional embodiments of the present invention, which will not be elaborated herein one by one.

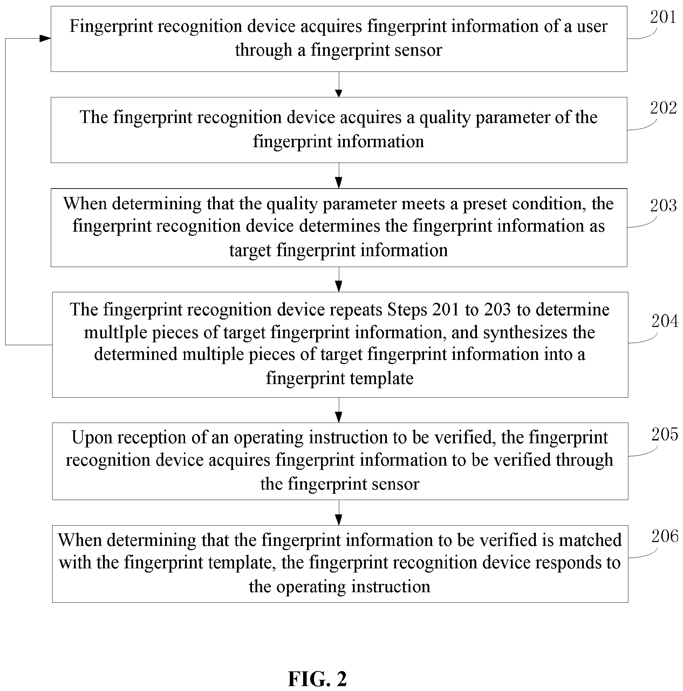

Fig. 2 is a flow chart showing a fingerprint template acquisition method, according to an exemplary embodiment. The fingerprint template acquisition method is applied to a fingerprint recognition device, and as shown in Fig. 2, includes the following steps.

In Step 201, the fingerprint recognition device acquires fingerprint information of a user through a fingerprint sensor.

In the embodiment, the fingerprint recognition device is equipped with the fingerprint sensor, may acquire the fingerprint information of the user through the fingerprint sensor and recognize an identity of the user according to the fingerprint information. The fingerprint recognition device may be a smart door, an attendance machine, a safe, a smart phone or the like, which will not be limited in the embodiment.

Here, the fingerprint sensor may be an optical fingerprint sensor, a semiconductor fingerprint sensor, an ultrasonic fingerprint sensor or the like, which will not be limited in the embodiment.

For protecting information security of the user, when receiving an operating instruction to be verified, the fingerprint recognition device firstly judges whether fingerprint information to be verified is matched with a fingerprint template of the user or not, and then determines whether to respond to the operating instruction or not. Before that, the fingerprint recognition device has acquired the fingerprint template of the user according to the fingerprint information of the user.

In Step 202, the fingerprint recognition device acquires a quality parameter of the fingerprint information.

In Step 203, when determining that the quality parameter meets a preset condition, the fingerprint recognition device determines the fingerprint information as target fingerprint information.

During a practical application, in the event that that the user does not completely cover a sensing region of the fingerprint sensor with a finger, or dust is attached to the finger of the user or the like, the fingerprint recognition device may acquire fingerprint information with relatively poor quality, which further causes inaccuracy of an acquired fingerprint template. Or, in the fingerprint template acquisition process, if the user uses different fingers, the fingerprint recognition device may synthesize fingerprint information on different fingers into a fingerprint template o, which may also cause inaccuracy of the acquired fingerprint template.

Therefore, in the embodiment, after acquiring the fingerprint information, the fingerprint recognition device may not directly determine the fingerprint information as the target fingerprint information for synthesizing into a fingerprint template; and instead, the fingerprint recognition device acquires the quality parameter of the fingerprint information, judges whether the quality parameter meets the preset condition or not, and determines the fingerprint information as the target fingerprint information when determining that the quality parameter of the fingerprint information meets the preset condition.

Here, the quality parameter is used to represent quality of the fingerprint information, and if the fingerprint information is clearer and more complete, the quality parameter of the fingerprint information is higher. The preset condition is used to specify a quality parameter of target fingerprint information, that is, fingerprint information of which a quality parameter meets the preset condition may be determined as target fingerprint information. By setting the preset condition, a purpose of filtering fingerprint information may be achieved according to the preset condition, and it may be ensured that merely fingerprint information meeting the preset condition can be determined as target fingerprint information.

During the practical application, the quality parameter may include different types of parameters, and correspondingly, the preset condition may include different types of conditions. Description will be made in the embodiment with the following three possible implementations as examples.

In a first possible implementation, the quality parameter includes a feature point number.

After acquiring the fingerprint information, the fingerprint recognition device may extract feature points from the fingerprint information and combine feature points of multiple pieces of fingerprint information into a fingerprint template. Therefore, the fingerprint template is actually a set of the feature points, and accuracy of the fingerprint template may be influenced by the feature point number. Then, every time when fingerprint information is acquired, if feature points, acquired by the fingerprint recognition device, of the fingerprint information are insufficient, quality of a synthesized fingerprint template is relatively poor.

In order to avoid such a situation, after acquiring the fingerprint information and extracting the feature points from the fingerprint information, the fingerprint recognition device calculates the number of the extracted feature points, judges whether the feature point number is larger than a first preset threshold value or not, and determines the fingerprint information as target fingerprint information when determining that the feature point number is larger than the first preset threshold value.

Here, the fingerprint recognition device may extract the feature points from the fingerprint information by adopting a preset extraction algorithm. The preset extraction algorithm may be a gray-level co-occurrence matrix algorithm, an edge detection operator algorithm, a wavelet transform algorithm and the like, which will not be limited in the embodiment. The first preset threshold value is used to specify a minimum feature point number of target fingerprint information, and may be determined by the fingerprint recognition device according to a requirement on the accuracy of the fingerprint template. The first preset threshold value will not be limited in the embodiment.

In addition, when the fingerprint recognition device determines that the feature point number is not larger than the first preset threshold value, a first prompting page may be displayed to prompt the user of continuing inputting fingerprint information, and then, the fingerprint recognition device may repeatedly execute Steps 201 to 203 to continue acquiring fingerprint information until the feature point number of acquired fingerprint information becomes larger than the first preset threshold value, and then the fingerprint recognition device determines the fingerprint information as target fingerprint information.

Here, the first prompting page may be configured to prompt the user that the feature point number of the currently input fingerprint information is excessively small. Moreover, the feature point number is excessively small usually because of an excessively small contact area of a finger of the user with the sensing region of the fingerprint sensor. Therefore, the first prompting page may further be configured to prompt the user of enlarging the contact area of the finger with the sensing region.

In a second possible implementation, the quality parameter includes a fingerprint area.

Every time when fingerprint information is acquired, if an area, acquired by the fingerprint recognition device, of the fingerprint information is insufficient, an information amount included in the fingerprint information is insufficient, and the quality of the fingerprint template is further influenced. In order to avoid such a situation, after acquiring the fingerprint information, the fingerprint recognition device may calculate the fingerprint area of the fingerprint information, judge whether the fingerprint area is larger than a second preset threshold value or not and determine the fingerprint information as target fingerprint information when determining that the fingerprint area is larger than the second preset threshold value.

Here, the second preset threshold value is configured to specify a minimum fingerprint area of the target fingerprint information, and may be determined by the fingerprint recognition device according to the requirement on the accuracy of the fingerprint template. The second preset threshold value will not be limited in the embodiment.

In addition, when the fingerprint recognition device determines that the fingerprint area is not larger than the second preset threshold value, a second prompting page may be displayed to prompt the user of continuing inputting fingerprint information, and then the fingerprint recognition device may repeatedly execute Steps 201 to 203 to continue acquiring fingerprint information until the fingerprint area of acquired fingerprint information becomes larger than the second preset threshold value, and then the fingerprint recognition device determines the fingerprint information as target fingerprint information.

Here, the second prompting page may be configured to prompt the user of enlarging the contact area of the finger and the sensing region of the fingerprint sensor.

In a third possible implementation, the quality parameter includes an overlapping area with a previous piece of target fingerprint information.

During the practical application, a purpose of acquiring a fingerprint template is to subsequently recognize a finger of the user by virtue of the fingerprint template. Therefore, the acquired fingerprint template may be acquired by synthesizing fingerprint information of the same finger, and may not be acquired by synthesizing fingerprint information of different fingers. In the fingerprint template acquisition process, if the user uses different fingers and the fingerprint recognition device directly determines fingerprint information of the different fingers as target fingerprint information, the corresponding fingers may not be recognized by a subsequently synthesized fingerprint template.

In order to avoid such a situation, after acquiring the fingerprint information, the fingerprint recognition device may acquire the previous piece of target fingerprint information, calculate the overlapping area of the fingerprint information and the previous piece of target fingerprint information and judge whether the overlapping area of the fingerprint information and the previous piece of target fingerprint information is larger than a third preset threshold value or not, may determine that the fingerprint information and the previous piece of target fingerprint information are from the same finger of the user when determining that the overlapping area is larger than the third preset threshold value, and at this moment, may determine the fingerprint information as target fingerprint information.

Here, the third preset threshold value is configured to specify a minimum overlapping area of target fingerprint information and the previous piece of target fingerprint information. The third preset threshold value may be determined by the fingerprint recognition device according to the requirement on the accuracy of the fingerprint template, and the third preset threshold value will not be limited in the embodiment.

In addition, when the fingerprint recognition device determines that the overlapping area of the fingerprint information and the previous piece of target fingerprint information is not larger than the third preset threshold value, a third prompting page may be displayed to prompt the user of continuing inputting fingerprint information, and then the fingerprint recognition device may repeatedly execute Steps 201 to 203 to continue acquiring fingerprint information until an overlapping area of acquired fingerprint information and the previous piece of target fingerprint information becomes larger than the third preset threshold value, and then the fingerprint recognition device determines the fingerprint information as target fingerprint information.

Here, the third prompting page may be configured to prompt the user that the currently input fingerprint information and the previous piece of target fingerprint information are from different fingers. For example, the third prompting page may include text information "please do not input fingerprint information with different fingers!", which will not be limited in the embodiment.

It is to be noted that the above three possible implementations may be freely combined into optional embodiments of the present invention. For example, the quality parameter may include the feature point number and the fingerprint area, and then the preset condition is that the feature point number is larger than the first preset threshold value and the fingerprint area is larger than the second preset threshold value. That is, the fingerprint recognition device acquires the feature point number and fingerprint area of the fingerprint information, and determines the fingerprint information as target fingerprint information when the feature point number is larger than the first preset threshold value and the fingerprint area is larger than the second preset threshold value.

In Step 204, the fingerprint recognition device repeats Steps 201-203 to determine multiple pieces of target fingerprint information, and synthesizes the determined multiple pieces of target fingerprint information into a fingerprint template.

The fingerprint recognition device may determine a fourth preset threshold value. When the number of the acquired pieces of target fingerprint information reaches the fourth preset threshold value, the fingerprint recognition device may extract feature points from the pieces of target fingerprint information of which the number is equal to the fourth preset threshold value and synthesize all the extracted feature points into the fingerprint template.

Here, the fourth preset threshold value is configured to specify the number of the pieces of target fingerprint information. The fourth preset threshold value may be determined by the fingerprint recognition device according to the requirement on the accuracy of the fingerprint template, and the fourth preset threshold value will not be limited in the embodiment.

It is to be noted that description is made in the embodiment merely with the condition that the fingerprint recognition device acquires just one piece of fingerprint information every time, judges whether a quality parameter of the fingerprint information meets the preset condition or not, and then acquires a next piece of fingerprint information as an example. That is, every time when fingerprint information is acquired, the fingerprint information is judged to determine target fingerprint information of which a quality parameter meets a requirement.

In a process of determining the target fingerprint information, the fingerprint recognition device may count the number of the pieces of target fingerprint information, and every time when executing Steps 201-203 to obtain a new piece of target fingerprint information, the fingerprint recognition device may add 1 to the number of the pieces of target fingerprint information. When it is determined that the count value reaches the fourth preset threshold value, the fingerprint recognition device synthesizes the determined pieces of target fingerprint information of which the number is equal to the fourth preset threshold value into the fingerprint template.

In another embodiment provided by the embodiment, every time when acquiring a piece of fingerprint information, the fingerprint recognition device may also acquire a next piece of fingerprint information. And after acquiring multiple pieces of fingerprint information, the fingerprint recognition device may judge whether quality parameters of the multiple pieces of fingerprint information meet the preset condition or not. That is, firstly, multiple pieces of fingerprint information are acquired, and then target fingerprint information of which quality parameters meet the requirement are selected therefrom.

In a possible implementation, the fingerprint recognition device may count the pieces of fingerprint information when acquiring the fingerprint information, and every time when acquiring a new piece of fingerprint information, may add 1 to the number of the pieces of fingerprint information. When determining that the count value reaches the fourth preset threshold value, the fingerprint recognition device executes Step 202 and Step 203 to judge whether quality parameters of the pieces of fingerprint information of which the number is equal to the fourth preset threshold value meet the preset condition or not respectively.

If all the quality parameters of the pieces of fingerprint information of which the number is equal to the fourth preset threshold value meet the preset condition, the fingerprint recognition device may synthesize the fingerprint information into the fingerprint template.

If there is one or more pieces of fingerprint information of which the quality parameter does not meet the preset condition in the pieces of fingerprint information of which the number is equal to the fourth preset threshold value, the fingerprint recognition device may display a fourth prompting page to prompt the user of continuing inputting fingerprint information, and then the fingerprint recognition device may repeatedly execute Steps 201 to 203 to continue acquiring fingerprint information and select the fingerprint information, and when the number of the acquired pieces of target fingerprint information reaches the fourth preset threshold value, the fingerprint recognition device synthesizes the pieces of target fingerprint information of which the number is equal to the fourth preset threshold value into the fingerprint template.

Here, the fourth prompting page is configured to prompt the user that there is one or more pieces of fingerprint information of which the quality parameter does not meet the preset condition in all the fingerprint information which has currently been input, and may further be configured to prompt the user of enlarging the contact area of the finger and the sensing region, removing the dust attached to the finger, inputting fingerprint information with the same finger and the like, which will not be limited in the embodiment.

In Step 205, when receiving an operating instruction to be verified, the fingerprint recognition device acquires fingerprint information to be verified through the fingerprint sensor.

In Step 206, when determining that the fingerprint information to be verified is matched with the fingerprint template, the fingerprint recognition device responds to the operating instruction.

When the fingerprint recognition device receives the operating instruction to be verified, a fingerprint input prompting page may be displayed. The fingerprint input prompting page is configured to prompt the user of inputting a fingerprint on the sensing region of the fingerprint sensor. The user may contact with the sensing region with a finger according to a prompt of the fingerprint input prompting page. The fingerprint recognition device may acquire fingerprint information of the finger of the user as the fingerprint information to be verified through the fingerprint sensor, extract multiple feature points of the fingerprint information to be verified and judge whether the multiple feature points are matched with the fingerprint template or not. When determining that the multiple feature points are matched with the fingerprint template, the fingerprint recognition device may determine that the current user is a user confirmed by the fingerprint recognition device and responds to the operating instruction.

The fingerprint recognition device may acquire a fingerprint template for each of different fingers of the same user or different users respectively, thereby recognizing different fingers. Therefore, the fingerprint recognition device may acquire multiple fingerprint templates by adopting the method provided by the embodiment. After the fingerprint recognition device receives the operating instruction to be verified and acquires the fingerprint information to be verified, when it is determined that the fingerprint information to be verified is matched with any fingerprint template in the multiple fingerprint templates, the fingerprint recognition device may respond to the operating instruction.

For example, when the fingerprint recognition device is a smart door, the smart door may acquire fingerprint templates of all members in a family, thereby ensuring that any family member can open the smart door.

The embodiment may be applied to multiple scenes, and the fingerprint recognition device may be a smart phone, a smart door, a safe, an attendance machine and the like. For example, the fingerprint recognition device may be a smart phone, and if the user wishes to verify a fingerprint when unlocking the smart phone, the smart phone may acquire a fingerprint template by Steps 201 to 203. When the smart phone receives an unlocking instruction and an identity of the user is to be verified with the unlocking instruction, the smart phone may acquire fingerprint information to be verified through the fingerprint sensor. When it is determined that the fingerprint information to be verified is matched with the pre-acquired fingerprint template, the smart phone may be unlocked.

According to the method provided by the embodiment, the at least one piece of fingerprint information of the user is acquired through the fingerprint sensor; for each of the at least one piece of fingerprint information, the quality parameter of the piece of fingerprint information is acquired; when it is determined that the quality parameter meets the preset condition, the fingerprint information is determined as the target fingerprint information; and the determined target fingerprint information is synthesized into the fingerprint template. In the embodiment, in the fingerprint template acquisition process, not every piece of the acquired fingerprint information is determined as target fingerprint information for synthesizing into the fingerprint template. Instead, influence of the quality of the fingerprint information is fully considered. When the quality parameter of a certain piece of fingerprint information meets the preset condition, the piece of fingerprint information may be determined as target fingerprint information. In this way, quality of the fingerprint template is improved, and accuracy of fingerprint recognition is further improved.

When the fingerprint recognition device determines that a quality parameter of a certain piece of fingerprint information does not meet the preset prompting condition, the corresponding prompting page may be displayed to prompt the user of enlarging the contact area of the finger and the sensing region of the fingerprint sensor or inputting fingerprint information with the same finger according to the quality parameter. Display of the prompting page helps the user to input fingerprint information, and thus fingerprint information of which a quality parameter meets the preset condition is conveniently acquired, and flexibility is improved.

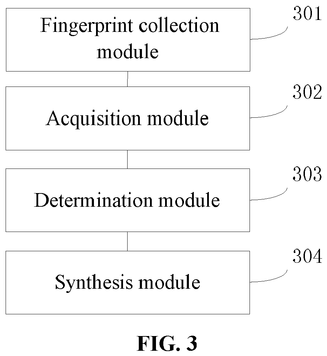

Fig. 3 is a block diagram of a fingerprint template acquisition device, according to an exemplary embodiment. Referring to Fig. 3, the device includes a fingerprint collection module 301, an acquisition module 302, a determination module 303 and a synthesis module 304.

The fingerprint collection module 301 is configured to acquire at least one piece of fingerprint information of a user through a fingerprint sensor.

The acquisition module 302 is configured to, for each of the at least one piece of fingerprint information, acquire a quality parameter of the piece of fingerprint information, the quality parameter being used to represent quality of the fingerprint information.

The determination module 303 is configured to, when it is determined that the quality parameter meets a preset condition, determine the fingerprint information as target fingerprint information, the preset condition being used to specify a quality parameter of fingerprint information.

The synthesis module 304 is configured to synthesize the target fingerprint information determined from the at least one piece of fingerprint information into a fingerprint template.

According to the device provided by the embodiment, the at least one piece of fingerprint information of the user is acquired through the fingerprint sensor; for each of the at least one piece of fingerprint information, the quality parameter of the piece of fingerprint information is acquired; when it is determined that the quality parameter meets the preset condition, the fingerprint information is determined as the target fingerprint information; and the determined target fingerprint information is synthesized into the fingerprint template. In the embodiment, in a fingerprint template acquisition process, not every piece of acquired fingerprint information is determined as target fingerprint information for synthesizing into the fingerprint template. Instead, influence of the quality of the fingerprint information is fully considered. When the quality parameter of a certain piece of fingerprint information meets the preset condition, the piece of fingerprint information may be determined as target fingerprint information. In this way, quality of the fingerprint template is improved, and accuracy of fingerprint recognition is further improved.

In a possible implementation, the quality parameter includes a feature point number, and the determination module 303 is further configured to, when it is determined that the feature point number is larger than a first preset threshold value, determine the fingerprint information as the target fingerprint information, the first preset threshold value being used to specify a minimum feature point number of target fingerprint information.

In another possible implementation, the quality parameter includes a fingerprint area, and the determination module 303 is further configured to, when it is determined that the fingerprint area is larger than a second preset threshold value, determine the fingerprint information as the target fingerprint information, the second preset threshold value being used to specify a minimum fingerprint area of target fingerprint information.

In another possible implementation, the quality parameter includes an overlapping area with previous piece of target fingerprint information, and the acquisition module 302 is further configured to calculate the overlapping area of the fingerprint information and the previous piece of target fingerprint information.

In another possible implementation, the determination module 303 is further configured to, when it is determined that the overlapping area of the fingerprint information and the previous piece of target fingerprint information is larger than a third preset threshold value, determine the fingerprint information as the target fingerprint information, the third preset threshold value being used to specify a minimum overlapping area of target fingerprint information and previous piece of target fingerprint information.

In another possible implementation, the synthesis module 304 is further configured to, when a number of the determined pieces of target fingerprint information reaches a fourth preset threshold value, synthesize the determined target fingerprint information into the fingerprint template, the fourth preset threshold value being used to specify the number of the pieces of target fingerprint information.

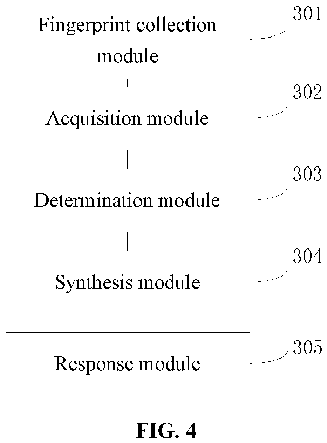

In another possible implementation, referring to Fig. 4, the device further includes a response module 305.

The fingerprint collection module 301 is further configured to, when an operating instruction to be verified is received, acquire fingerprint information to be verified through the fingerprint sensor.

The response module 305 is configured to, when it is determined that the fingerprint information to be verified is matched with the fingerprint template, respond to the operating instruction.

All of the optional technical solutions may be freely combined into optional embodiments of the present invention, which will not be elaborated herein one by one.

With respect to the devices in the above embodiments, the specific manners for performing operations for individual modules therein have been described in detail in the embodiments regarding the method, which will not be elaborated herein.

It is to be noted that, when acquiring the fingerprint template, the fingerprint template acquisition device provided by the embodiment is merely described with division of each of the abovementioned function modules as an example, and during a practical application, the abovementioned functions may be allocated to different function modules for realization as desired, that is, internal structures of the fingerprint recognition device are divided into different function modules to realize all or part of the abovementioned functions. In addition, the fingerprint template acquisition device provided by the embodiment belongs to the same concept as the fingerprint template acquisition method embodiment, and details about its specific implementation process refer to the method embodiment, and will not be elaborated herein.

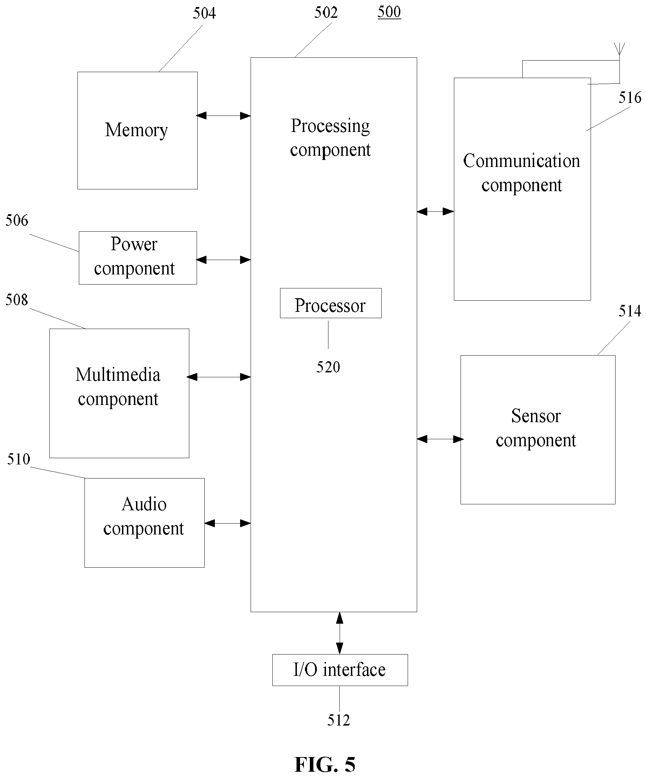

Fig. 5 is a block diagram of a fingerprint template acquisition device 500, according to an exemplary embodiment. For example, the device 500 may be a mobile phone, a computer, a digital broadcast terminal, a messaging device, a gaming console, a tablet, a medical device, an exercise device, a personal digital assistant and the like.

Referring to Fig. 5, the device 500 may include one or more of the following components: a processing component 502, a memory 504, a power component 506, a multimedia component 508, an audio component 510, an Input/Output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the abovementioned method. Moreover, the processing component 502 may include one or more modules which facilitate interaction between the processing component 502 and the other components. For instance, the processing component 502 may include a multimedia module to facilitate interaction between the multimedia component 508 and the processing component 502.

The memory 504 is configured to store various types of data to support the operation of the device 500. Examples of such data include instructions for any application programs or methods operated on the device 500, contact data, phonebook data, messages, pictures, video, etc. The memory 504 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 506 provides power for various components of the device 500. The power component 506 may include a power management system, one or more power supplies, and other components associated with the generation, management and distribution of power for the device 500.

The multimedia component 508 includes a screen providing an output interface between the device 500 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also detect a duration and pressure associated with the touch or swipe action. In some embodiments, the multimedia component 508 includes a front camera and/or a rear camera. The front camera and/or the rear camera may receive external multimedia data when the device 500 is in an operation mode, such as a photographing mode or a video mode. Each of the front camera and the rear camera may be a fixed optical lens system or have focusing and optical zooming capabilities.

The audio component 510 is configured to output and/or input an audio signal. For example, the audio component 510 includes a Microphone (MIC), and the MIC is configured to receive an external audio signal when the device 500 is in the operation mode, such as a call mode, a recording mode and a voice recognition mode. The received audio signal may be further stored in the memory 504 or sent through the communication component 516. In some embodiments, the audio component 510 further includes a speaker configured to output the audio signal.

The I/O interface 512 provides an interface between the processing component 502 and a peripheral interface module, and the peripheral interface module may be a keyboard, a click wheel, a button and the like. The button may include, but not limited to: a home button, a volume button, a starting button and a locking button.

The sensor component 514 includes one or more sensors configured to provide status assessment in various aspects for the device 500. For instance, the sensor component 514 may detect an on/off status of the device 500 and relative positioning of components, such as a display and small keyboard of the device 500, and the sensor component 514 may further detect a change in a position of the device 500 or a component of the device 500, presence or absence of contact between the user and the device 500, orientation or acceleration/deceleration of the device 500 and a change in temperature of the device 500. The sensor component 514 may include a proximity sensor configured to detect presence of an object nearby without any physical contact. The sensor component 514 may also include a light sensor, such as a Complementary Metal Oxide Semiconductor (CMOS) or Charge Coupled Device (CCD) image sensor, configured for use in an imaging application. In some embodiments, the sensor component 514 may also include an acceleration sensor, a gyroscope sensor, a magnetic sensor, a pressure sensor or a temperature sensor.

The communication component 516 is configured to facilitate wired or wireless communication between the device 500 and another device. The device 500 may access a communication-standard-based wireless network, such as a Wireless Fidelity (WiFi) network, a 2nd-Generation (2G) or 3rd-Generation (3G) network or a combination thereof. In an exemplary embodiment, the communication component 516 receives a broadcast signal or broadcast associated information from an external broadcast management system through a broadcast channel. In an exemplary embodiment, the communication component 516 further includes a Near Field Communciation (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a Bluetooth (BT) technology and another technology.

In an exemplary embodiment, the device 500 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 504 including an instruction, and the instruction may be executed by the processor 520 of the device 500 to implement the abovementioned method. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

According to a non-transitory computer-readable storage medium, an instruction in the storage medium is executed by a processor of a fingerprint recognition device to enable the fingerprint recognition device to execute a fingerprint template acquisition method, the method including that:
at least one piece of fingerprint information of a user is acquired through a fingerprint sensor;
for each of the at least one piece of fingerprint information, a quality parameter of the fingerprint information is acquired, the quality parameter being used to represent quality of the fingerprint information;
when it is determined that the quality parameter meets a preset condition, the fingerprint information is determined as target fingerprint information, the preset condition being used to specify a quality parameter of fingerprint information; and
the target fingerprint information determined from the at least one piece of fingerprint information is synthesized into a fingerprint template.

In a possible implementation, the quality parameter includes a feature point number, and the step that the fingerprint information is determined as the target fingerprint information when it is determined that the quality parameter meets the preset condition includes that:
when it is determined that the feature point number is larger than a first preset threshold value, the fingerprint information is determined as the target fingerprint information, the first preset threshold value being used to specify a minimum feature point number of target fingerprint information.

In another possible implementation, the quality parameter includes a fingerprint area, and the step that the fingerprint information is determined as the target fingerprint information when it is determined that the quality parameter meets the preset condition includes that:
when it is determined that the fingerprint area is larger than a second preset threshold value, the fingerprint information is determined as the target fingerprint information, the second preset threshold value being used to specify a minimum fingerprint area of target fingerprint information.

In another possible implementation, the quality parameter includes an overlapping area with previous piece of target fingerprint information, and the step that the quality parameter of the fingerprint information is acquired includes that:
the overlapping area of the fingerprint information and the previous piece of target fingerprint information is calculated.

In another possible implementation, the step that the fingerprint information is determined as the target fingerprint information when it is determined that the quality parameter meets the preset condition includes that:
when it is determined that the overlapping area of the fingerprint information and the previous piece of target fingerprint information is larger than a third preset threshold value, the fingerprint information is determined as the target fingerprint information, the third preset threshold value being used to specify a minimum overlapping area of target fingerprint information and previous piece of target fingerprint information.

In another possible implementation, the step that the target fingerprint information determined from the at least one piece of fingerprint information is synthesized into the fingerprint template includes that:
when a number of the determined pieces of target fingerprint information reaches a fourth preset threshold value, the determined pieces of target fingerprint information are synthesized into the fingerprint template, the fourth preset threshold value being used to specify an amount of target fingerprint information.

In another possible implementation, the method further includes that:
when an operating instruction to be verified is received, fingerprint information to be verified is acquired through the fingerprint sensor; and
when it is determined that the fingerprint information to be verified is matched with the fingerprint template, a response is provided to the operating instruction.

Other embodiments of the present invention will be apparent to those skilled in the art from consideration of the specification and practice of the present invention. This application is intended to cover any variations, uses, or adaptations of the present invention following the general principles thereof and including such departures from the present invention as come within known or customary practice in the art. It is intended that the specification and examples be considered as just exemplary, with a true scope and spirit of the present invention being indicated by the following claims.

It will be appreciated that the present invention is not limited to the exact construction that has been described above and illustrated in the accompanying drawings, and that various modifications and changes may be made without departing from the scope thereof. It is intended that the scope of the present invention be limited by the appended claims.

## Claims

1. A fingerprint template acquisition method, **characterized in that**, the method comprises:
acquiring at least one piece of fingerprint information of a user through a fingerprint sensor;
for each of the at least one piece of fingerprint information, acquiring a quality parameter of the piece of fingerprint information, wherein the quality parameter is used to represent quality of the fingerprint information;
determining the piece of fingerprint information as a piece of target fingerprint information, when determining that the quality parameter meets a preset condition, wherein the preset condition is used to specify a quality parameter of fingerprint information; and
synthesizing at least one piece of target fingerprint information determined from the at least one piece of fingerprint information into the fingerprint template.

2. The method of claim 1, wherein the quality parameter comprises a feature point number, and
wherein the determining the piece of fingerprint information as a piece of target fingerprint information, when determining that the quality parameter meets a preset condition comprises:
determining the piece of fingerprint information as the piece of target fingerprint information, when determining that the feature point number is larger than a first preset threshold value, wherein the first preset threshold value is used to specify a minimum feature point number of the target fingerprint information.

3. The method of claim 1, wherein the quality parameter comprises a fingerprint area, and
wherein the determining the piece of fingerprint information as a piece of target fingerprint information, when determining that the quality parameter meets a preset condition comprises:
determining the piece of fingerprint information as the piece of target fingerprint information, when determining that the fingerprint area is larger than a second preset threshold value, wherein the second preset threshold value is used to specify a minimum fingerprint area of the target fingerprint information.

4. The method of claim 1, wherein the quality parameter comprises an overlapping area with a previous piece of target fingerprint information, and
wherein the acquiring a quality parameter of the fingerprint information comprises:
calculating the overlapping area of the piece of fingerprint information and the previous piece of target fingerprint information.

5. The method of claim 4, wherein the determining the piece of fingerprint information as a piece of target fingerprint information, when determining that the quality parameter meets a preset condition comprises:
determining the piece of fingerprint information as the piece of target fingerprint information, when determining that the overlapping area of the piece of fingerprint information and the previous piece of target fingerprint information is larger than a third preset threshold value, wherein the third preset threshold value is used to specify a minimum overlapping area of the piece of target fingerprint information and the previous piece of target fingerprint information.

6. The method of claim 1, wherein the synthesizing the at least one piece of target fingerprint information determined from the at least one piece of fingerprint information into the fingerprint template comprises:
when a number of the determined pieces of target fingerprint information reaches a fourth preset threshold value, synthesizing the determined pieces of target fingerprint information into the fingerprint template, wherein the fourth preset threshold value is used to specify the number of the pieces of target fingerprint information.

7. The method of claim 1, comprising:
upon reception of an operating instruction to be verified, acquiring fingerprint information to be verified through the fingerprint sensor; and
when determining that the fingerprint information to be verified is matched with the fingerprint template, responding to the operating instruction.

8. A fingerprint template acquisition device, comprising:
a fingerprint collection module, configured to acquire at least one piece of fingerprint information of a user through a fingerprint sensor;
an acquisition module, configured to, for each of the at least one piece of fingerprint information, acquire a quality parameter of the piece of fingerprint information, wherein the quality parameter is used to represent quality of the fingerprint information;
a determination module, configured to, when it is determined that the quality parameter meets a preset condition, determine the piece of fingerprint information as a piece of target fingerprint information, wherein the preset condition is used to specify a quality parameter of fingerprint information; and
a synthesis module, configured to synthesize at least one piece of target fingerprint information determined from the at least one piece of fingerprint information into the fingerprint template.

9. The device of claim 8, wherein the quality parameter comprises a feature point number, and
wherein the determination module is further configured to, when it is determined that the feature point number is larger than a first preset threshold value, determine the piece of fingerprint information as the piece of target fingerprint information, wherein the first preset threshold value is used to specify a minimum feature point number of the target fingerprint information.

10. The device of claim 8, wherein the quality parameter comprises a fingerprint area, and
wherein the determination module is further configured to, when it is determined that the fingerprint area is larger than a second preset threshold value, determine the piece of fingerprint information as the piece of target fingerprint information, wherein the second preset threshold value is used to specify a minimum fingerprint area of target fingerprint information.

11. The device of claim 8, wherein the quality parameter comprises an overlapping area with a previous piece of target fingerprint information, and
wherein the acquisition module is further configured to calculate the overlapping area of piece of the fingerprint information and the previous piece of target fingerprint information.

12. The device of claim 11, wherein the determination module is further configured to, when it is determined that the overlapping area of the fingerprint information and the previous piece of target fingerprint information is larger than a third preset threshold value, determine the piece of fingerprint information as the piece of target fingerprint information, wherein the third preset threshold value is used to specify a minimum overlapping area of the piece of target fingerprint information and the previous piece of target fingerprint information.

13. The device of claim 8, wherein the synthesis module is further configured to, when a number of the determined pieces of target fingerprint information reaches a fourth preset threshold value, synthesize the determined at least one piece of target fingerprint information into the fingerprint template, wherein the fourth preset threshold value is used to specify the number of the pieces of target fingerprint information.

14. The device of claim 8, wherein the fingerprint collection module, further configured to, when an operating instruction to be verified is received, acquire fingerprint information to be verified through the fingerprint sensor; and
wherein the device further comprises a response module, configured to, when it is determined that the fingerprint information to be verified is matched with the fingerprint template, provide a response to the operating instruction.

15. A fingerprint template acquisition device, comprising:
a processor;
a memory storing instructions executable by the processor; and
a fingerprint sensor,
wherein the processor is configured to execute the fingerprint template acquisition method according to any of claims 1 to 7.
